# EUROPEAN PATENT APPLICATION

(11) **EP 4 227 479 A1**
(43) Date of publication of application: **16.08.2023**
(21) Application number: 23153943.8
(22) Date of filing: 30.01.2023
(51) Int. Cl.: E04H 15/10, F21S 4/00, F21V 21/00

(54) **TENT OR AWNING WITH INTEGRATED MEANS FOR ILLUMINATION**

(30) Priority: 09.02.2022 DK PA202200109
(71) Applicant: Oase Outdoors APS, 7323 Give (DK)
(72) Inventor: Arens, Henrik Frank, 7182 Bredsten (DK)
(74) Representative: Larsen & Birkeholm A/S

(57) **Abstract**

The invention relates to a tent or awning comprising a tent cloth, and an illumination device. The illumination device comprises a) an elongated support plate fastened to, preferably sewn onto, said tent cloth; and b) an elongated core comprising a fiber optic cable, a photoluminescent material, an electroluminescent wire, or the like embedded within said support plate.

## Description

### Field of the Invention

The present invention relates to the field of tents or awnings.

### Background of the Invention

Many existing tents or awnings do not have illumination means. When illumination is desired, detached lights are used. Such a detach light is usually placed inside of the tent and in most cases is hung at the top of the tent. As such, it reduces the usable interior space of the tent. In addition, as it is a separate component from the tent, it is often a component that is forgotten. At night, it is often difficult to find the tent or awning and even more difficult to find the zipper to enter or exit the tent.

### Object of the Invention

The objective of the present invention is to provide a tent or awning solving at least some of the above problems.

### Description of the Invention

A first aspect relates to a tent or awning comprising:
- a tent cloth; and
- an illumination device;
wherein the illumination device comprises:
- an elongated support plate fastened to, preferably sewn onto, said tent cloth; and
- an elongated core comprising a fiber optic cable, a photoluminescent material, an electroluminescent wire, or the like embedded within said support plate.

A second aspect relates to a tent or awning comprising:
- a tent cloth; and
- an illumination device;
wherein the illumination device is fastened to, preferably sewn onto, said tent cloth. Preferably, the illumination device comprises a fiber optic cable, an elongated photoluminescent material, an electroluminescent wire, or the like, preferably embedded within a polymeric material, preferably transparent to the light source of said illumination device.

The present invention allows the user of a tent or awning according to the present invention to obtain illumination within the awning or tent (e.g., the inner tent or vestibule) without losing space. Furthermore, other parts of the tent or awning, such as an entrance or zipper may be illuminated by using the technology of the present invention.

In one or more embodiments, the illumination device further comprises a light source adapted for directing light into said elongated core. In the present context, the term "light source" is to be understood as a unit capable of emitting visible light, i.e., light that is perceived by a human being. As used herein, the term "visible light" specifically relates to light having a wavelength within the range of 380 to 780 nm. Preferably, the light source may be a chips-on-board (COB) light source, such as a semiconductor light-emitting diode (LED) chip in the form of a semiconductor chip that is mounted directly on a substrate, such as a printed circuit board (PCB) or equivalent.

In one or more embodiments, the illumination device further comprises an energy source, such as a battery unit, adapted for providing energy to said light source. The battery unit may e.g., be rechargeable.

In one or more embodiments, the elongated core comprises a fiber optic cable. The term "fiber optic cable" is intended to encompass one or more optical fibers for transmitting light and may include the structure in which it is carried and protected during and after installation. It also includes "hollow-core" fiber optic cables in which light is conducted through the air as a central conductor.

In the present context, the term "electroluminescent wire" is understood here to mean a wire, known per se, which includes a central electrical conductor or "core" covered with a phosphor-based layer having electroluminescent properties, this layer itself being surrounded by at least one other electrical conductor wound around said layer.

In one or more embodiments, the illumination device further comprises:
- a light source adapted for directing light into said elongated core; and
- an energy source, such as a battery unit, adapted for providing energy to said light source.

In one or more embodiments, the light source and the energy source are configured as a single unit and for releasably fastening to the elongated support plate and/or to the elongated core.

In one or more embodiments, the light source comprises a channel, and wherein said light source is configured to direct light through said channel, wherein the elongated core comprises an end section adapted for fitting into said channel.

In one or more embodiments, the light source comprises a channel, and wherein the elongated core comprises an end section adapted for fitting into said channel.

In one or more embodiments, the channel comprises fastening means adapted for releasably fastening the end section of the elongated core thereto.

In one or more embodiments, the illumination device is configured as an elongate plate with a relatively thickened first side portion holding the elongate core, and a relatively thinner second side portion fastened to, preferably sewn onto, said tent cloth. Preferably, the first side portion is configured as clip-on support for equipment, such as a clip-on hanger or hook adapted for holding utensils. Thereby, the illumination device obtains a dual function that requires minimal space.

In one or more embodiments, the tent or awning further comprises one or more clip-on hangers or hooks adapted for holding utensils and for being releasably fastened to said first side portion.

As used in the specification and the appended claims, the singular forms "a", "an", and "the" include plural referents unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about", it will be understood that the particular value forms another embodiment.

It should be noted that embodiments and features described in the context of one of the aspects of the present invention also apply to the other aspects of the invention.

The invention is described in more detail in the following detailed description of a preferred embodiment, with reference to the figures.

### Brief description of the figures

Figure 1 is a schematic drawing of a tent in accordance with various embodiments of the invention.
Figure 2 is a perspective view of a part of an illumination device in accordance with various embodiments of the invention.
Figure 3 is a perspective view of a part of an illumination device in accordance with various embodiments of the invention mounted to an inner tent opening.
Figure 4 is an exploded view of a combined light source and battery unit in accordance with various embodiments of the invention.
Figure 5 is a perspective view of a part of an illumination device in accordance with various embodiments of the invention.
Figure 6 is a perspective view of a part of an illumination device in accordance with various embodiments of the invention, where a clip-on hanger is mounted to a side portion of the support plate.
Figure 7 is a perspective view of a clip-on hanger in accordance with various embodiments of the invention.

### References

- 10: Zipper
- 100: Tent
- 110: Inner tent
- 120: Vestibule
- 200: Tent cloth
- 300: Illumination device
- 310: Support plate
- 312: Second side portion
- 314: First side portion
- 320: Core
- 322: End section
- 330: Light source
- 332: Channel
- 333: Fastening means
- 334: LED chip
- 340: Battery unit
- 342: Battery
- 344: Battery cover
- 346: Printed circuit board
- 348: Base
- 400: Clip-on hanger
- 410: Closure end
- 420: Knob
- 430: Hole
- 440: Lever end

### Detailed Description of the Invention

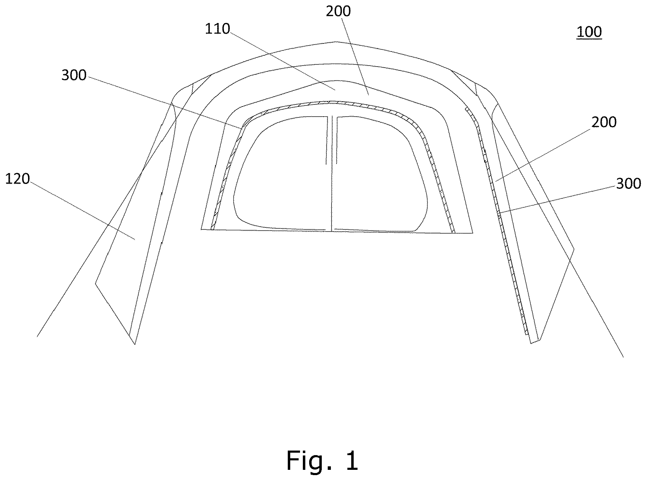

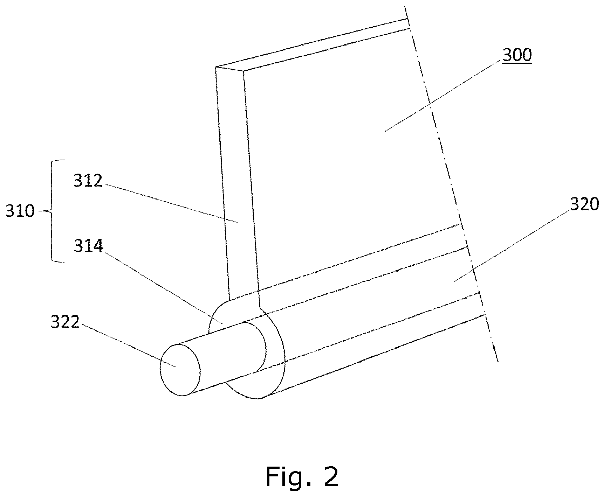

Figure 1 is a schematic drawing of a tent 100 in accordance with various embodiments of the invention. The tent 100 comprises an inner tent 110 and a vestibule 120. An illumination device 300 is shown sewn into the tent cloth 200 at the entrances to both the vestibule 120 and the inner tent 110. A closer view of a part of the illumination device 300 is shown in Figure 2. The illumination device 300 comprises an elongated support plate 310 adapted for being sewn onto the tent cloth 200 (Figure 1), and an elongated core 320 comprising a fiber optic cable embedded within the support plate 310. In the present configuration, the illumination device 300 is configured as an elongate plate with a relatively thickened first side portion 314 formed by both the elongate core 320 and the elongated support plate 310, and a relatively thinner second side portion 312 solely formed by the elongated support plate 310.

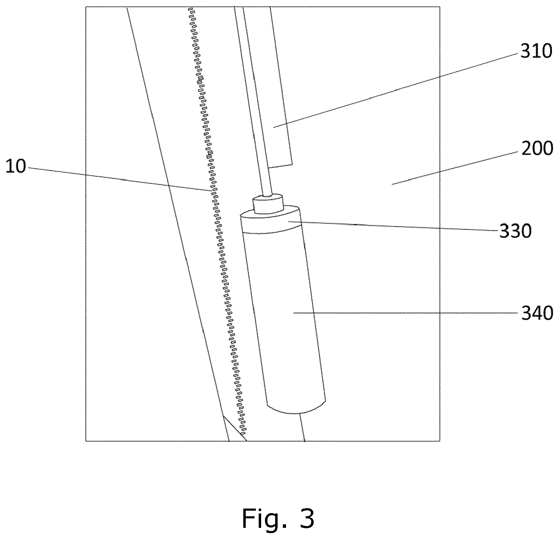

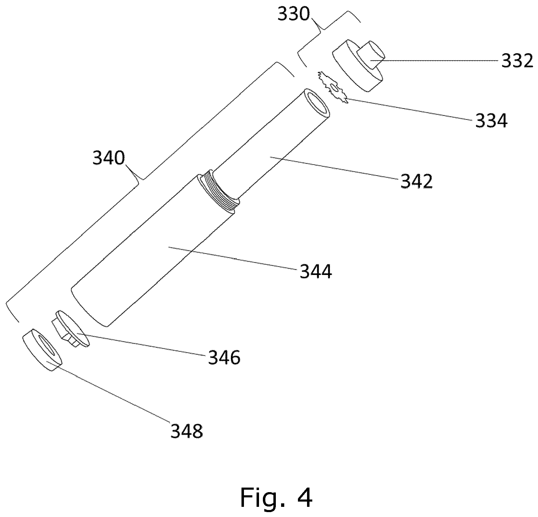

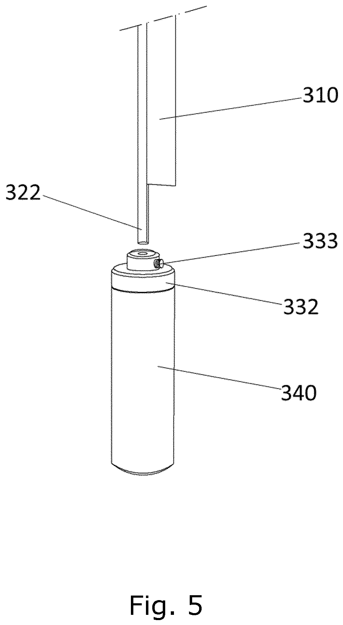

Figure 3 shows a perspective view of a part of an illumination device 300 in accordance with various embodiments of the invention and mounted to the cloth 200 of an inner tent's opening. Here, the illumination device 300 is mounted to the right of the zipper 10 of the inner tent's opening. In alternative embodiments, the illumination device 300 may be mounted to the door of the inner tent, thereby allowing it to be moved together with the door. The illumination device 300 is also shown with a combined light source 330 and battery unit 340. An exploded view of a preferred example of a combined light source 330 and battery unit 340 is shown in Figure 4. Here, the light source 330 is shown comprising an LED chip 334 directing its light into a channel 332 (here an adaptor unit with a channel) adapted for receiving an end section 322 (Figure 2) of the elongated core 320. The adaptor unit is configured to be releasably fastened to the battery unit 340. The channel 332 may e.g., be provided with fastening means 333 as shown in Figure 5, here embodied as a set screw, but a bolt may alternatively be used. Thereby, the elongated core 320 may be releasably fastened to the channel 332. The battery unit 340 (Figure 4) is shown comprising a battery 342, a battery cover 344, a printed circuit board 346 configured for controlling the activation of the battery 342, and a base 348 adapted for holding the printed circuit board 346 and preferably also serving as the bottom of the battery cover 344. The printed circuit board 346 may comprise a communication component adapted for wireless communication with a remote control (not shown). The remote control may e.g., be a smartphone with an application adapted for sending instructions to the printed circuit board 346, such as simple on/off instructions, or instructions about when to turn the light source, e.g., the shown LED chip 334, on or off at specific time periods. In the latter situation, the printed circuit board 346 may comprise a timer component configured for such use. The light source may be configured to selectively emit light at different wavelengths, e.g., one "night light", e.g., blue light, inside the inner tent and a white light when used on the outside of the inner tent, vestibule, or awning. These configurations may e.g., be configurable in the application of a smartphone, or be preset in a more traditional remote control.

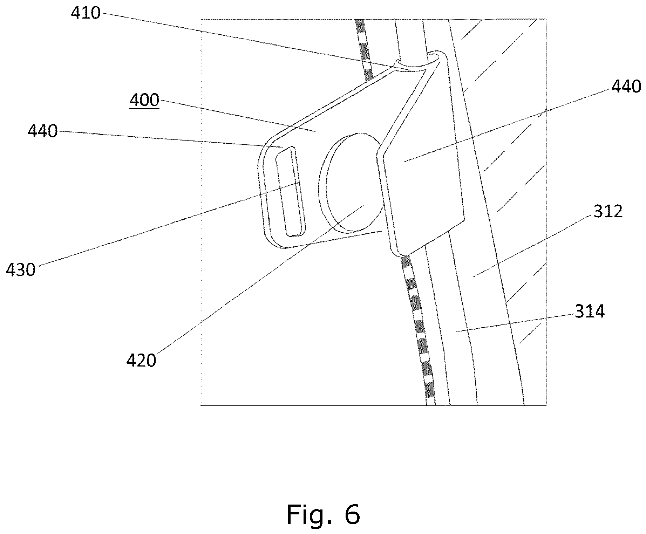

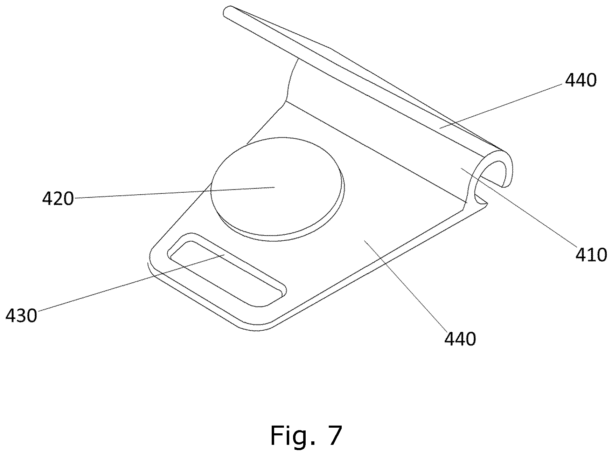

Figure 6 is a perspective view of a part of an illumination device in accordance with various embodiments of the invention, where a clip-on hanger 400 is mounted to a side portion 314 of the support plate 310. Here, the side portion 314 of the support plate 310 is configured as a cylinder for easy attachment and removal of the clip-on hanger 400. The clip-on hanger 400 is adapted for holding utensils. Thereby, the illumination device obtains a dual function that requires minimal space. The shown clip-on hanger 400 comprises a closure end 410 with an opening that can be increased when the two lever ends 440 are forced/pressed towards each other and decreased again when the force/pressure is removed. One or both of the two lever ends may comprise a hole 430 and/or a knob 420. The hole 430 may be adapted for receiving a hook, a lace, or the like. The knob 420 may be adapted for receiving a strap, a hanger, an electric cord, or the like. Thereby, different types of utensils may be held by the clip-on hanger 400. Figure 7 shows an example of a clip-on hanger 400 suitable for use with the illumination device according to the present invention.

## Claims

1. A tent (100) or awning comprising:
- a tent or awning cloth (200); and
- an illumination device (300);
**characterized in that** the illumination device (300) comprises:
- an elongated support plate (310) fastened to, preferably sewn onto, said tent cloth (200); and
- an elongated core (320) comprising a fiber optic cable, a photoluminescent material, an electroluminescent wire, or the like embedded within said support plate (310).

2. The tent (100) or awning according to claim 1, wherein said illumination device (300) further comprises a light source (330) adapted for directing light into said elongated core (320).

3. The tent (100) or awning according to claim 2, wherein said illumination device (300) further comprises an energy source, such as a battery unit (340), adapted for providing energy to said light source (330).

4. The tent (100) or awning according to claim 1, wherein the elongated core (320) comprises a fiber optic cable.

5. The tent (100) or awning according to claim 4, wherein said illumination device (300) further comprises:
- a light source (330) adapted for directing light into said elongated core; and
- an energy source (340), such as a battery unit, adapted for providing energy to said light source (330).

6. The tent (100) or awning according to claim 5, wherein the light source (330) and the energy source (340) are configured as a single unit and for releasably fastening to the elongated support plate (310) and/or to the elongated core (320).

7. The tent (100) or awning according to claim 6, wherein the light source (330) comprises a channel (332), and wherein said light source (330) is configured to direct light through said channel (332), and wherein the elongated core (320) comprises an end section (322) adapted for fitting into said channel (332).

8. The tent (100) or awning according to claim 7, wherein the channel (332) comprises fastening means (334) adapted for releasably fastening the end section (322) of the elongated core (320) thereto.

9. The tent (100) or awning according to any one of the claims 1-8, wherein the illumination device (300) is configured as an elongate plate with a relatively thickened first side portion (314) holding the elongate core (320), and a relatively thinner second side portion (312) fastened to, preferably sewn onto, said tent or awning cloth (200).

10. The tent (100) or awning according to claim 9, wherein the first side portion (314) is configured as clip-on support for equipment, such as a clip-on hanger (400) or hook adapted for holding utensils.

11. A tent or awning according to claim 10, further comprising one or more clip-on hangers (400) or hooks adapted for holding utensils and for being releasably fastened to said first side portion (314).
